# EUROPÄISCHE PATENTANMELDUNG

(11) **EP 1 256 661 A2**
(43) Veröffentlichungstag der Anmeldung: **13.11.2002**
(21) Anmeldenummer: 02003743.8
(22) Anmeldetag: 19.02.2002
(51) Int. Cl.: E02D 31/00

(54) **Vorrichtung zur Abdichtung von Flächen, insbesondere von Deponien**

(30) Priorität: 20.02.2001 DE 10108047; 06.08.2001 DE 10138539
(71) Anmelder: Beluso Consult & Marketing GmbH & Co. KG, 34266 Niestetal (DE)
(72) Erfinder: Wiemer, Klaus, Prof. Dr.-Ing., 34266 Niestetal-Sandershausen (DE); Behling, Dirk, Dr.-Ing., 37213 Witzenhausen (DE); Schmeisky, Helge, Prof. Dr., 37213 Witzenhausen (DE)
(74) Vertreter: Zinnecker, Armin, Dipl.-Ing.

(57) **Zusammenfassung**

Eine Vorrichtung dient zur Abdichtung von Flächen, insbesondere von Deponien, Halden, Haufwerken oder dergleichen. Um das Eindringen von Niederschlagswasser zu verhindern, eine großflächige Methanoxidation zu ermöglichen und Sickerwasseraustritte in den Untergrund zu vermeiden, weist die Vorrichtung eine mineralische Dichtungsschicht (1) auf, die mit einer wasserdurchlässigen Schicht (2, 3, 4) versehen ist (Abb. 1d).

## Beschreibung

Die Erfindung betrifft eine Vorrichtung zur Abdichtung von Flächen, insbesondere von Deponien, Halden, Haufwerken oder dergleichen. Die Erfindung betrifft ferner eine Deponie, eine Halde, ein Haufwerk oder dergleichen, die durch eine derartige Vorrichtung gekennzeichnet ist. Schließlich betrifft die Erfindung auch eine Schlitzwand, die durch eine derartige Vorrichtung gekennzeichnet ist.

Die Vorrichtung zur Abdichtung von Flächen kann insbesondere dazu verwendet werden, die Basis und/oder Oberfläche von Deponien, Halden, Haufwerken und dergleichen abzudichten, insbesondere gegenüber Sickerwasser und Niederschlägen.

Die Abdichtung der Basisflächen und der Oberflächen von Deponien, Halden, sonstigen Haufwerken sowie von Flächen gegenüber eindringenden Wässern ist eine in der Technik immer wiederkehrende Aufgabe. Volkswirtschaftlich und umweltbezogen ist insbesondere die Abdichtung von Deponien und Halden von großer Bedeutung. Für diesen Zweck sind technische Regelwerke und Verwaltungsvorschriften wie z.B. in Deutschland die Technische Anleitung Siedlungsabfall (TASi) in Kraft gesetzt worden, welche bei der Herstellung entsprechender Dichtungen zu berücksichtigen sind.

Dichtungen gemäß derartiger Vorgaben verfügen über eine grundsätzliche Eignung für den gedachten Zweck, sind jedoch mit konstruktionsbedingten Nachteilen behaftet. Diese Nachteile betreffen den konstruktionsbedingten Aufwand sowie die damit verbundenen Kosten, den Schutz natürlicher Tonlagerstätten, die Dauerhaftigkeit, die Verknüpfung der technischen Ansprüche der Wasserdichtigkeit mit den Ansprüchen der Gasdurchlässigkeit sowie die funktionale Einbeziehung einer oberhalb der Dichtung angeordneten Pflanzendecke mit ihrem spezifischen Evapotranspirationspotenzial.

Besonders deutlich werden diese Nachteile bei der Deponieoberflächendichtung, wie sie in der TASi vorgeschrieben ist. Die hier geforderte Kombinationsdichtung, im wesentlichen bestehend aus einer über dem Abfall befindlichen, verdichteten Tonlage mit aufgelegter Kunststoffdichtungsbahn, Entwässerungsschicht und einer darüber befindlichen Rekultivierungsschicht, ist aus vielfältigen Gründen für den gedachten Zweck nur bedingt geeignet.
- Hochwertiger Ton ist nicht in allen Landesteilen gleichermaßen verfügbar, das heißt unter Umständen müssen erhebliche Tonmengen mit entsprechenden umweltbezogenen und wirtschaftlichen Nachteilen über weite Strecken transportiert werden.
- Die Schichten der Kombinationsdichtung sind verhältnismäßig glatt, so daß infolge von Schubwirkungen oder partiellen Staunässen ein Abgleiten der Schichten in Hangbereichen nicht auszuschließen ist.
- Die aufgelegte Kunststoffdichtungsbahn ist nur zeitlich begrenzt haltbar. Dies bedeutet, daß langfristig allein die Tonlage mit ihren spezifischen Nachteilen wirksam wird.
- Die Schöpftiefe der Vegetationsdecke bezieht sich ausschließlich auf den Bereich der über der Kunststoffdichtungsbahn angeordneten Rekultivierungsschicht (Wurzelboden). Dies verstärkt die Gefahr von Trockenschäden der Vegetation, da überschüssiges versickertes Wasser über die drainierend wirkende Entwässerungsschicht abgeführt wird und nicht später wieder als Kapillarwasser nach oben Richtung Pflanzenwurzeln nachgeliefert werden kann.
- Die Durchwurzelung beschränkt sich auf die Rekultivierungsschicht (Wurzelboden), da die Kunststoffdichtungsbahn von Wurzeln nicht durchdrungen wird. Hierdurch erhöht sich neben der Gefahr von Trockenschäden die sogenannte Windwurfgefahr.
- Eine großflächige Deponieentgasung mit dem Ziel der Methanoxidation in der Deckschicht wird durch den gewählten Oberflächendichtungsaufbau verhindert. Methanaustritte konzentrieren sich auf Schadstellen, wodurch die Methanoxidationskapazität in diesen Bereichen überfordert wird.
- Die Tonschicht unterhalb der Kunststoffdichtungsbahn neigt zum Austrocknen und damit zur Bildung von Trockenrissen, welche nach dem Versagen der Kunststoffdichtungsbahn nicht mehr zuquellen: Langfristig gesehen neigt somit das Gesamtsystem zur Nichterfüllung der konstruktiv vorgesehenen Aufgabe.
- Aufgrund des letztgenannten Kriteriums wird die Nachsorgefreiheit von Deponien in Frage gestellt, da ab einem nicht vorher bekannten Zeitpunkt die Dichtungsfunktion beider Dichtungselemente nachlässt. Hierdurch wird zu einem zeitlich verzögerten Zeitpunkt eine erneute Sickerwasserproduktion auftreten. Entsprechende Sickerwasserreinigungseinrichtungen (Biologie, Umkehrosmose) werden dann aber bereits voraussichtlich stillgelegt sein.

Hiervon ausgehend liegt der Erfindung die Aufgabe zugrunde, eine verbesserte Vorrichtung der eingangs angegebenen Art vorzuschlagen.

Erfindungsgemäß wird diese Aufgabe durch eine mineralische Dichtungsschicht gelöst, die mit einer wasserdurchlässigen Schicht versehen ist.

Durch die erfindungsgemäße Vorrichtung kann sichergestellt werden, daß das Dichtungssystem hochwirksam ist und dauerhaft im Sinne der Nachsorgefreiheit eine gleichbleibende Dichtwirkung erbringt.

Eine vorteilhafte Weiterbildung der Erfindung ist dadurch gekennzeichnet, daß die wasserdurchlässige Schicht und die mineralische Dichtungsschicht einen vorgegebenen k_{F}-Wert erreichen. Die wasserdurchlässige Schicht ist also vorzugsweise derart ausgestaltet, daß sie zusammen mit der mineralischen Dichtungsschicht einen vorgegebenen k_{F}-Wert hat. Dieser k_{F}-Wert bezieht sich auf das Gesamtsystem der beiden Dichtungsschichten, insbesondere dergestalt, daß die Eigenschaften der wasserdurchlässigen Schicht derart festgelegt werden, daß das Gesamtsystem den vorgegebenen k_{F}-Wert erreicht. Insbesondere kann die freie Fugenfläche der wasserdurchlässigen Schicht abgestimmt auf den k_{F}-Wert und/oder die Schichtstärke der mineralischen Dichtungsschicht festgelegt werden.

Der k_{F}-Wert kann 10⁻⁹ m/sec. betragen. Dieser Wert ist insbesondere für Oberflächendichtungen kennzeichnend. Der k_{F}-Wert kann ferner höchstens 10⁻¹⁰ m/sec. betragen. Dieser Wert ist insbesondere kennzeichnend für Basisdichtungen.

Durch die Erfindung wird insbesondere die Möglichkeit geschaffen, Vorrichtungen zur Abdichtung von Flächen, insbesondere von Deponien, Halden, Haufwerken oder dergleichen mit mineralischen Dichtungsschichten zu schaffen, deren k_{F}-Wert an sich nicht ausreichend, nämlich zu hoch, ist. Beispielsweise gibt es mineralische Dichtungsschichten, die einen k_{F}-Wert von 10⁻⁸ oder 10⁻⁷ m/sec. aufweisen. In diesem Fall kann die mineralische Dichtungsschicht mit einer wasserdurchlässigen Schicht versehen werden, die derart ausgestaltet ist, daß der gesamte Schichtaufbau, bestehend aus mineralischer Dichtungsschicht und wasserdurchlässiger Schicht, einen ausreichend niedrigen k_{F}-Wert von beispielsweise 10⁻⁹ oder 10⁻¹⁰ m/sec. erhält.

In ähnlicher Weise ist es möglich, durch die Erfindung die Stärke der mineralischen Dichtungsschicht zu vermindern. Durch die Verminderung der Stärke der mineralischen Dichtungsschicht wird der k_{F}-Wert verschlechtert, also vergrößert. Diese Verschlechterung des k_{F}-Wertes kann durch eine entsprechend gestaltete wasserdurchlässige Schicht ausgeglichen werden. Auf diese Weise ist es in bestimmten Fällen insbesondere möglich, die Schichtdicke der mineralischen Dichtungsschicht auf ein technisch gut handhabbares Maß von beispielsweise 0,25 m zu reduzieren.

Durch die Erfindung kann das Problem gelöst werden, ein Eindringen von Niederschlagswasser zu verhindern, eine großflächige Methanoxidation zu ermöglichen und Sickerwasseraustritte in den Untergrund zu vermeiden.

Die wasserdurchlässige Schicht kann wasserundurchlässige Dichtungselemente umfassen. Sie kann allerdings auch wasserdurchlässige Dichtungselemente umfassen. Vorteilhaft ist es, wenn zwischen den Dichtungselementen Fugen und/oder Lücken vorgesehen sind. In diesem Fall sind die Dichtungselemente vorzugsweise wasserundurchlässig. Durch die Fugen oder Lücken wird die gesamte Schicht wasserdurchlässig. Wenn wasserdurchlässige Dichtungselemente verwendet werden sind diese vorzugsweise gezielt wasserdurchlässig. Auch in diesem Fall ist es allerdings möglich, zwischen den wasserdurchlässigen Dichtungselementen Fugen und/oder Lücken vorzusehen. Entscheidend ist, daß die gesamte Schicht wasserdurchlässig ist.

Vorzugsweise sind die Fugen und/oder Lücken derart bemessen, daß die wasserdurchlässige Schicht und die mineralische Dichtungsschicht einen vorgegebenen k_{F}-Wert erreichen. Hierzu können die Fugenbreite bzw. Fugenfläche, der K_{F}-Wert und die Schichtdicke individuell, auf den Anwendungsfall bezogen, aufeinander abgestimmt werden. Wenn beispielsweise die Dichtungselemente derart bemessen sind, daß sie 99% der Fläche bedecken, und wenn dementsprechend die Fugen und/oder Lücken 1% der Fläche bedecken, bedeutet dies, daß für die Verbesserung, also Verminderung des k_{F}-Wertes der mineralischen Dichtungsschicht der Faktor 10² zur Verfügung steht. In einem entsprechenden Ausmaß kann für die mineralische Dichtungsschicht ein Material mit einem schlechteren, also höheren k_{F}-Wert und/oder eine geringere Schichtdicke der mineralischen Dichtungsschicht vorgesehen werden.

Bei den Dichtungselementen handelt es sich vorzugsweise um Kacheln. Die Kacheln sind wasserundurchlässig. Vorteilhaft ist die Verwendung von gebrannten Kacheln. Die Dichtungselemente können allerdings auch als trogförmige oder schalenförmige Gebilde ausgestaltet sein.

Vorteilhaft ist es, wenn nur Teile der mineralischen Dichtungsschicht mit Kacheln bzw. trog- oder schalenförmigen Gebilden versehen sind. Hierdurch werden Lücken zwischen den Dichtungselementen geschaffen.

Eine weitere vorteilhafte Weiterbildung ist dadurch gekennzeichnet, daß die Dichtungselemente an der mineralischen Dichtungsschicht liegen. Vorzugsweise liegen die Dichtungselemente auf der mineralischen Dichtungsschicht.

Es ist allerdings auch möglich, daß die Dichtungselemente in der mineralischen Dichtungsschicht liegen.

Die Dichtungselemente können einlagig angeordnet sein. Sie können allerdings auch mehrlagig übereinander angeordnet sein. In diesem Fall ist es besonders vorteilhaft, die Dichtungselemente derart anzuordnen, daß die Projektion der freien Zwischenräume jeweils durch ein tieferliegendes Dichtungselement abgedeckt wird. In diesem Fall werden als Dichtungselemente vorzugsweise trog- oder schalenförmige Gebilde verwendet.

Die Dichtungselemente können mit anderen Dichtungselementen kombiniert werden, beispielsweise mit Folien, Vliesen, Dichtungsmatten oder sonstigen Dichtungslagen.

Auf die mineralische Dichtungsschicht kann eine Dichtungsbahn aufgelegt werden. Vorzugsweise handelt es sich um eine Kunststoffdichtungsbahn.

Die Dichtungselemente sind vorzugsweise auf Netzen, Vliesen oder dergleichen haftend angebracht oder mit Haftelementen verbunden.

Eine weitere vorteilhafte Weiterbildung ist dadurch gekennzeichnet, daß die Dichtungselemente in eine Matte, vorzugsweise eine Bentonitmatte, eingebettet sind. Die Matte kann durch Vliese oder Folien oder dergleichen umschlossen sein.

Vorteilhaft ist es, wenn die Dichtungselemente perforiert oder mit Aussparungen versehen sind.

Eine weitere vorteilhafte Weiterbildung ist dadurch gekennzeichnet, daß die Auffangmulde der trog- oder schalenförmigen Gebilde mit grobporigen, feuchtigkeitsspeichernden oder stützenden Elementen ausgestaltet ist oder daß die trog- oder schalenförmigen Gebilde ganz aus grobporigen, feuchtigkeitsspeichernden oder stützenden Elementen bestehen.

Nach einer weiteren vorteilhaften Weiterbildung weisen die Dichtungselemente Aussparungen zur Aufnahme von Fugenmaterialien auf.

Eine weitere vorteilhafte Weiterbildung ist dadurch gekennzeichnet, daß die Dichtungselemente überlappend oder verzahnend ausgebildet sind.

Die Dichtungselemente können insbesondere mit Nuten, Stegen, Noppen, Löchern, Wölbungen, Aufkantungen oder dergleichen versehen sein. Hierdurch wird die Verlegung in Steilhängen z.B. ab Neigungsverhältnissen von 1:2 funktional deutlich verbessert (mineralische Kralle).

Eine weitere vorteilhafte Weiterbildung ist dadurch gekennzeichnet, daß die wasserdurchlässige Schicht eine wasserundurchlässige Folie umfaßt, die gezielt durchlöchert ist. Die Anordnung und Größe der Löcher in der Folie ist dabei vorzugsweise derart gewählt, daß die erforderliche Wasserdurchlässigkeit der Schicht erreicht wird, wobei auch die Neigung des Untergrundes und/oder die Eigenschaften der Schicht unter der Folie berücksichtigt werden können. Unter der Folie befindet sich dabei im Regelfall eine Tonschicht und/oder Dichtungsschicht, die durch eine Durchfeuchtung in ihrer Funktion gesichert werden soll (ein Austrocknen dieser Schicht soll vermieden werden) und deren Gasdurchlässigkeit sichergestellt werden soll. Durch die gezielt durchlöcherte Folie soll die anfänglich geringe Evapotranspirations-Funktion zunächst überbrückt werden. Ab einem späteren Zeitpunkt, der in etwa 50 bis 100 Jahre später liegen kann, wird die Evapotranspirations-Funktion durch die entstandene Vegetationsschicht gewährleistet. Wenn also die gezielt durchlöcherte Folie bis dahin nicht mehr vorhanden ist, kann ihre Funktion durch die entstandene Vegetationsschicht übernommen werden. Auf diese Weise ist eine dauerhaft sichere Dichtung erreichbar.

Gemäß der Erfindung ist ferner vorgesehen, eine Deponie, eine Halde, ein Haufwerk oder dergleichen mit einer erfindungsgemäßen Vorrichtung zu versehen. Hierbei ist es vorteilhaft, wenn die Oberflächendichtung und/oder die Basisdichtung und/oder eine Dichtung unterhalb der Basisdichtung eine erfindungsgemäße Vorrichtung umfaßt. Die unterhalb der Basisdichtung vorgesehene Dichtung kann als Ersatz für eine sogenannte geologische Barriere dienen.

Die Erfindung betrifft schließlich eine Schlitzwand, die durch eine erfindungsgemäße Vorrichtung gekennzeichnet ist.

Ausführungsbeispiele der Erfindung werden nachstehend anhand der beigefügten Zeichnung im einzelnen erläutert. In der Zeichnung zeigt
- Abb. 1a: eine mineralische Dichtungsschicht mit Kacheln in einem Querschnitt,
- Abb. 1b: die mineralische Dichtungsschicht gemäß Abb. 1a in einer Ansicht von oben,
- Abb. 1c: eine Variante der Dichtungsschicht gemäß Abb. 1a und b in einer Ansicht von oben,
- Abb. 1d: die mineralische Dichtungsschicht gemäß Abb. 1a bis c mit weiteren Schichten in einem Querschnitt,
- Abb. 2: eine mineralische Dichtungsschicht mit trog- oder schalenförmigen Gebilden in einem Querschnitt,
- Abb. 3: eine Variante der Dichtungsschicht gemäß Abb. 2, bei der die Dichtungselemente mehrlagig übereinander angeordnet sind,
- Abb. 4: eine mineralische Dichtungsschicht gemäß Abb. 3 mit Trockenrissen,
- Abb. 5: eine mineralische Dichtungsschicht, bei der Dichtungselemente in oder an eine Bentonitmatte eingebettet sind, in verschiedenen Varianten,
- Abb. 6: ineinander verzahnende Dichtungselemente,
- Abb. 7: trog- oder schalenförmige Gebilde mit grobporigen, feuchtigkeitsspeichernden oder stützenden Elementen,
- Abb. 8: Dichtungselemente mit Aussparungen zur Aufnahme von Fugenmaterialien,
- Abb. 9: eine Deponie in einer schematischen Seitenansicht und
- Abb. 10: eine Schlitzwand in einer Seitenansicht.

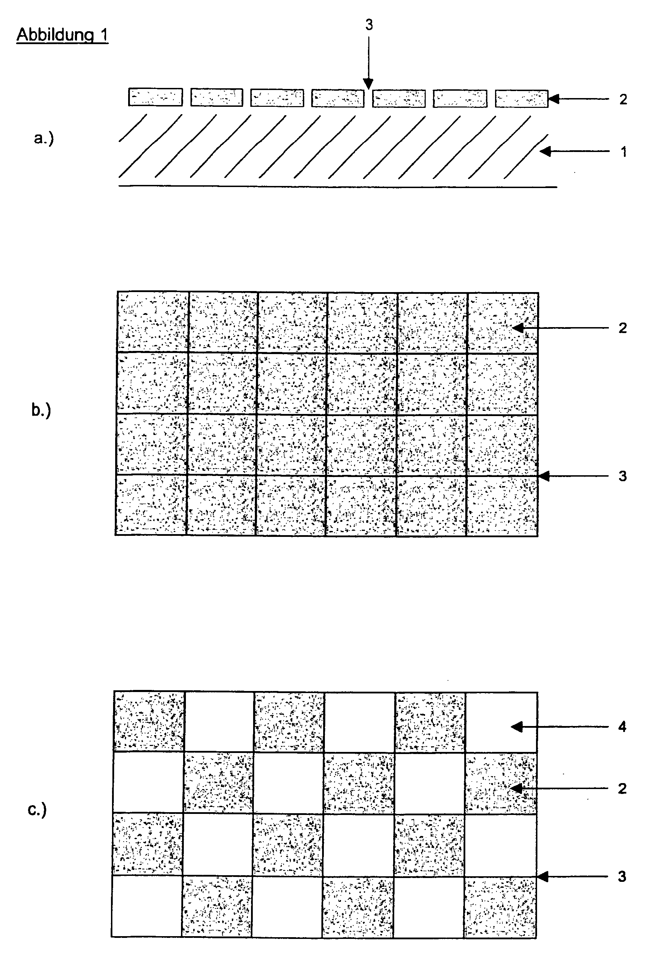

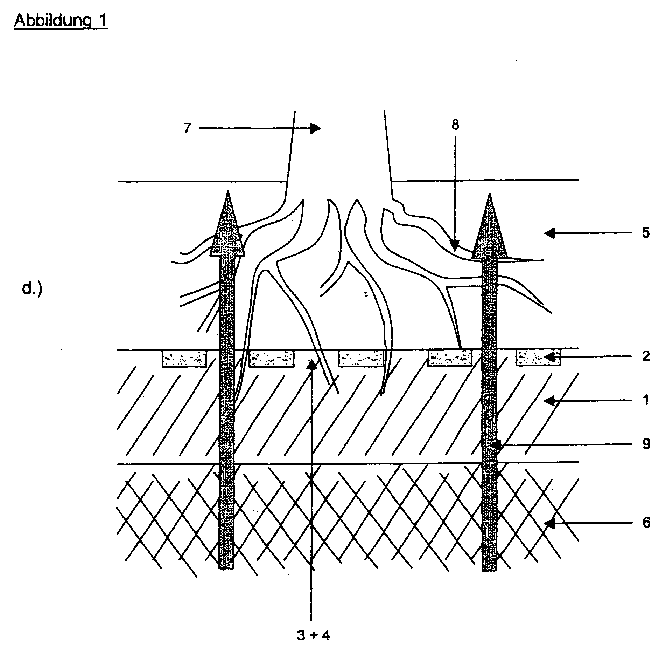

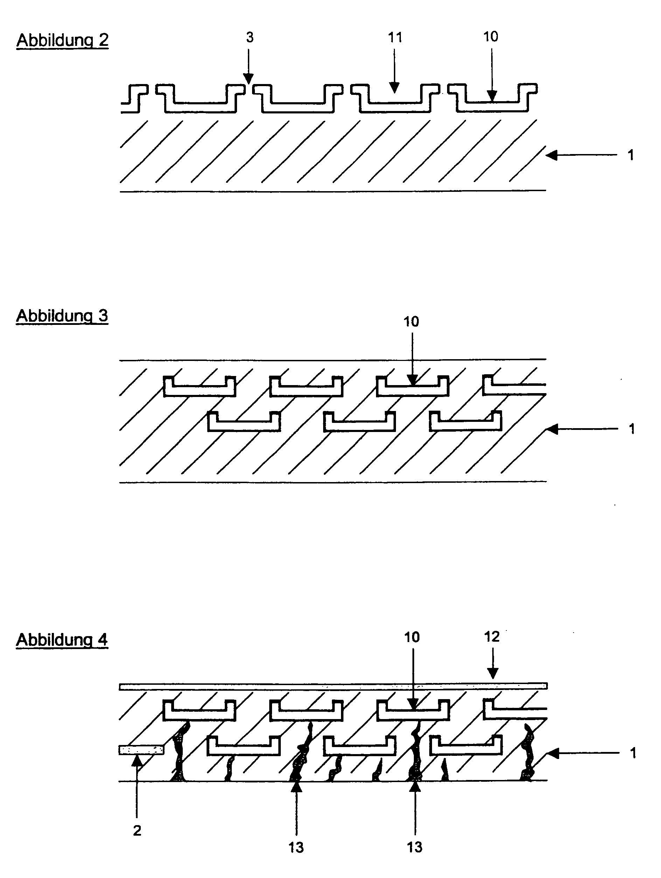

Die Abb. 1 zeigt Ausführungsformen, bei denen auf eine mineralische Dichtungsschicht 1 Dichtungselemente aufgelegt werden, die mit einem Belag aus Kacheln 2 verglichen werden können. Auf die mineralische Dichtungsschicht 1 sind Kacheln aufgelegt. Wie aus Abb. 1 ersichtlich, liegen die Kacheln 2 auf der mineralischen Dichtungsschicht 1 derart auf, daß dabei Fugen 3 entstehen. Es handelt sich um gebrannte Kacheln 2, die als absolut langzeitbeständig und wasserundurchlässig angesehen werden können, wodurch ein Effekt der Dauerhaftigkeit geschaffen wird. Die einzelnen Kacheln 2 sind wasserundurchlässig. Der gesamte Belag bildet aufgrund der Fugen 3 eine wasserdurchlässige Schicht.

Der Abstand der Fugen 3, welche bewußt offen gelassen werden, ist hierbei auf die Belange der mineralischen Dichtungsschicht 1 abgestimmt, wodurch diese dauerhaft feucht gehalten werden kann. Hierdurch kann die Bildung von Trockenrissen unterbunden werden. Je nach Bodenart können die Fugen 3 breiter oder enger gewählt werden.

Bei sehr engen Fugenabständen ist es konstruktiv möglich, etwa 99 % der Fläche mit Kacheln 2 zu bedecken, also nur etwa 1 % der Fläche offen zu lassen. Dies bedeutet qualitativ, daß, bezogen auf den k_{F}-Wert, die eingesetzten Böden in etwa um zwei Zehnerpotenzen durchlässiger gewählt werden können, um die gleiche Dichtwirkung zu erzielen wie durch eine mineralische Dichtungsschicht, welche nicht mit Kacheln belegt wurde.

In diesem Sinn ist es in einer abgewandelten Ausführungsform gemäß Abb. 1c auch möglich, gezielt nur Teile der Oberfläche mit Kacheln 2 zu belegen bzw. in Abstimmung auf die Bodenqualität bewußt Lücken 4 offen zu lassen und dennoch die gleiche Dichtwirkung zu erzielen wie eine deutlich feinporigere Dichtungsschicht.

Die hiermit bei der Oberflächenabdichtung verbundenen Vorteile zeigt Abb. 1d. Dort wird eine Deponieschicht 6 durch eine mineralische Dichtungsschicht 1, die sich darüber befindet, abgedichtet. Auf der mineralischen Dichtungsschicht 1 liegen Kacheln 2, die zwischen sich Fugen 3 oder Lücken 4 offen lassen. Über der mineralischen Dichtungsschicht 1 und den Kacheln 2 befindet sich die Rekultivierungsschicht 5, in die die Wurzeln 8 von Pflanzen 7 eindringen.

Infolge der erhöhten Porosität der mineralischen Dichtungsschicht 1 in Verbindung mit den Fugen 3 oder Lücken 4 zwischen den Kacheln 2 wird sowohl eine erhöhte gewünschte Gasmigration 9 in die Rekultivierungsschicht 5 als auch eine tiefer reichende gewünschte Durchwurzelung 8 mit entsprechenden Pflanzendecken 7 ermöglicht. Infolge der hierdurch erhöhten Schöpftiefe der Pflanzen 7 wird mit dieser Maßnahme sowohl das Evapotranspirationspotenzial der Pflanzendecke 7 gefördert als auch die Windwurfgefahr sowie die Gefahr von Trockenschäden gemindert. Zusätzlich wird durch die bessere Verzahnung die Gefahr des Abgleitens der Dichtungsschichten gemindert. Der großflächige Austritt von Deponiegas 9 in die Rekultivierungsschicht 5 fördert darüber hinausgehend die gewünschte Methanoxidation in diesen Deckbereichen.

Eine hierauf aufbauende, weitere Ausführungsform zeigt Abbildung 2. Hier werden anstelle der Kacheln 2 trog- oder schalenförmige Gebilde 10 auf die mineralische Schicht 1 aufgelegt, und zwar derart, daß die Vertiefungen 11 in der aus Abb. 2 ersichtlichen Weise nach oben weisen. Der sich ergebende Vorteil ist darin zu sehen, daß das den Wurzelboden durchdringende Niederschlagswasser sich in den Vertiefungen 11 der trog- oder schalenförmigen Gebilde 10 ansammeln kann. Es kann anschließend wiederum für kapillare Vorgänge bzw. für die Pflanzendecken zur Verfügung stehen.

Abb. 3 zeigt eine weitere Ausführungsform, bei der verschiedene Lagen der trogförmigen oder schalenförmigen Gebilde 10 in oder auf der mineralischen Dichtungsschicht 1 dergestalt angeordnet sind, daß die Projektion der freien Zwischenräume jeweils durch ein tieferliegendes trog- oder schalenförmiges Gebilde 10 abgedeckt wird. Die trog- oder schalenförmigen Gebilde 10 sind zweilagig übereinander angeordnet, und zwar derart, daß sich unter jeder Lücke zwischen den Gebilden 10 der oberen Lage ein Gebilde 10 der unteren Lage befindet. Hierdurch vereinigen sich die relativen Vorteile der ermöglichten Gasmigration mit der verbesserten Durchwurzelbarkeit sowie der Wasserbevorratung innerhalb der angepaßt dimensionierten trog- oder schalenförmigen Gebilde 10.

Abb. 4 zeigt eine Abwandlung der Ausführungsform gemäß Abb. 3, bei der zusätzlich auf die mineralische Dichtungsschicht 1 eine Kunststoffdichtungsbahn 12 aufgelegt ist. Abb. 4 zeigt dementsprechend in einer Sonderform die Verwendung dieses Dichtungsverfahrens als integraler Bestandteil einer Kombinationsdichtung. Die arttypischen eigentlichen Vorteile der Dichtungstechnik kommen hierbei dann zum Tragen, wenn die aufgelegte Kunststoffdichtungsbahn 12 in ihrer Dichtwirkung versagt. Zusätzlich zu den zuvor beschriebenen Vorteilen kommt hierbei positiv zum Tragen, daß eingetretene Trockenrisse 13 durch die Sperrwirkung der Kacheln 2 oder trog- oder schalenförmigen Gebilde 10 in ihrer Wirkung limitiert werden.

Wie aus den Abb. 1 bis 4 ersichtlich, können die Kacheldichtungen oder die Trogbzw. Schalenflächendichtungen einlagig oder mehrlagig übereinander angeordnet werden. Sie können mit anderen in der Technik gebräuchlichen Dichtungselementen wie Folien, Vliesen, Dichtungsmatten oder sonstigen Dichtungslagen kombiniert werden. Eine Kombination kann z.B. dadurch erreicht werden, daß die Kachel- oder Trogflächendichtung unterhalb einer Kunststoffdichtungsbahn angelegt wird. Dabei kann zwischen der Kachel- oder Trogflächendichtung und der Kunststoffdichtungsbahn eine Schutzschicht angelegt werden, beispielsweise in Form eines Geotextils. Wenn die Kunststoffichtungsbahn im Laufe der Jahre immer brüchiger wird und versagt kommt die Wirkung der Kachel- oder Trogflächendichtung zum Tragen.

Die Kacheln oder trog- bzw. schalenförmigen Gebilde können symmetrisch oder asymmetrisch geformt sein. Sie können sich ineinander verzahnen oder überlappen, insbesondere dachschindelartig überlappen. Sie können insbesondere zur Gleitsicherung oder Verzahnung mit Nuten, Stegen, Noppen, Löchern oder dergleichen versehen sein. Zur Vereinfachung der Verlegetechnik können sie außerdem auf Netzen, Vliesen und ähnlichem haftend angebracht oder mit Haftelementen verbunden sein. Netze, Vliese und ähnliches können sowohl auf der Oberseite als auch auf der Unterseite von Kacheln oder trog- bzw. schalenförmigen Gebilden angeordnet sein oder diese sowohl von der Oberseite als auch von der Unterseite umschließen.

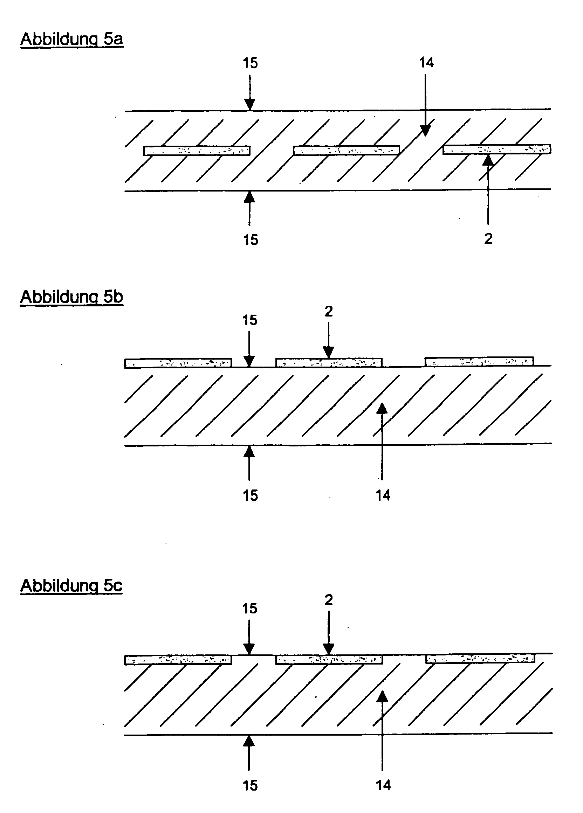

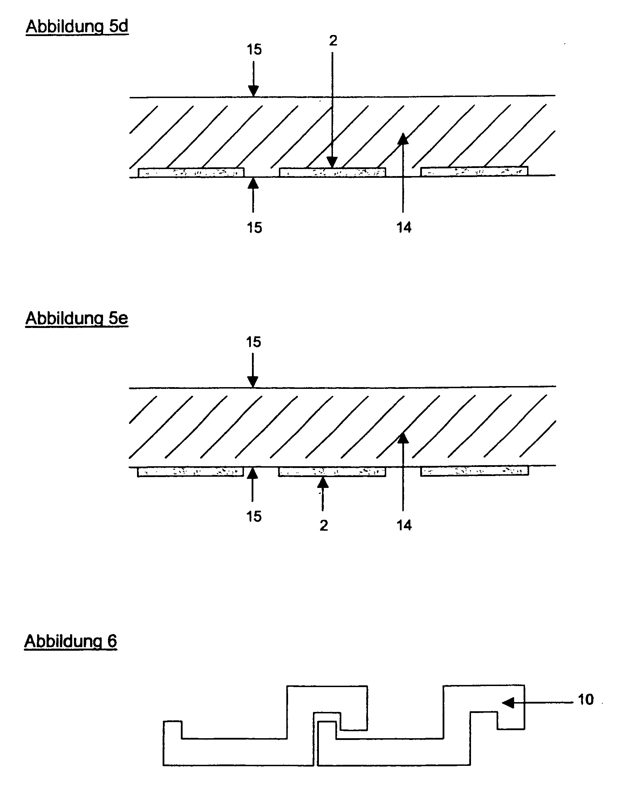

In Abb. 5 ist eine Sonderform gezeigt. Hierbei werden die Kacheln 2 (oder auch trog- bzw. schalenförmige Gebilde) in eine Bentonitmatte 14 eingebettet, wie dies in Abb. 5a gezeigt ist. Die Kacheln 2 (oder die trog- bzw. schalenförmigen Gebilde) können auch an einer Bentonitmatte 14 eingebettet sein, wie dies in Abb. 5b bis 5e dargestellt ist. Dabei können die Kacheln 2 (bzw. die trog- bzw. schalenförmigen Gebilde) auf der nach oben weisenden Oberfläche (Abb. 5b) oder auf der nach unten weisenden Oberfläche (Abb. 5e) aufgelegt sein oder in die nach oben weisende Oberfläche (Abb. 5c) oder die nach unten weisende Oberfläche (Abb. 5d) eingebettet sein. Die Bentonitmatte 14 ist vorteilhafterweise wiederum durch Vliese oder Folien 15 umschlossen.

Zur Anpassung der gewünschten Durchlässigkeit von Kacheldichtungen oder Trogbzw. Schalenflächendichtungen können neben der Variation des Fugenabstandes oder Lückenabstandes die Dichtungselemente perforiert oder mit Aussparungen versehen sein. Die Dichtungselemente sind dann nicht wasserundurchlässig, sondern gezielt wasserdurchlässig.

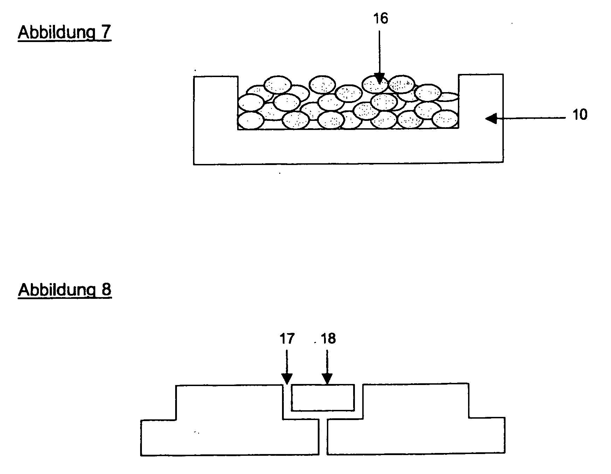

Abb. 6 zeigt eine Ausführungsform, bei der zur Erhöhung der flächigen Abdeckung Kacheln oder trog- bzw. schalenförmige Gebilde 10 ineinander verzahnt sind. Die Mulde der Gebilde 10 wird auf der linken Seite jeweils durch einen nach oben weisenden Steg begrenzt. Auf der jeweiligen rechten Seite befindet sich ein Halteelement, das aus einem nach oben weisenden Steg, einen sich daran anschließenden waagrechten Steg und einen sich daran anschließenden, nach unten weisenden Steg besteht, wobei das nach unten weisende U derart dimensioniert ist, daß es den auf der linken Seite befindlichen Steg des nächstfolgenden Gebildes 10 aufnehmen kann.

Gemäß der in Abb. 7 gezeigten Ausführungsform kann die Auffangmulde der trogoder schalenförmigen Gebilde 10 konstruktiv mit grobporigen, feuchtigkeitsspeichernden oder stützenden Elementen 16 ausgestaltet sein oder ganz aus diesen bestehen.

Für den Fall, daß bauseits eine Minimierung der durchlässigen Fugenfläche angestrebt wird, können gemäß Abb. 8 Kacheln oder trog- bzw. schalenförmige Gebilde entsprechende Aussparungen 17 zur Aufnahme starrer, flexibler, gegossener oder verschieden gas- oder flüssigkeitsdurchlässiger Fugenmaterialien 18 aufweisen. Die Aussparungen 17 befinden sich an den seitlichen Rändern der Kacheln oder trog- bzw. schalenförmigen Gebilde. Die Fugenmaterialien 18 überdecken jeweils Aussparungen zweier benachbarter Kacheln bzw. trog- bzw. schalenförmiger Gebilde. Nach einer weiteren vorteilhaften Weiterbildung werden die Aussparungen 17 mit quellfähigen Materialien 18 aufgefüllt.

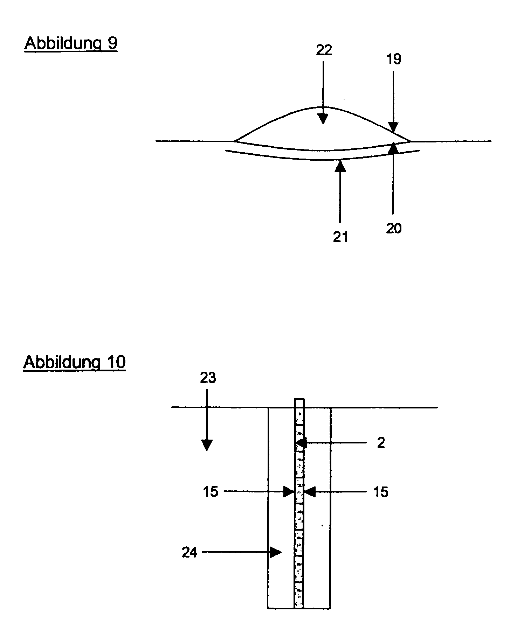

Abb. 9 zeigt die Anordnung der beschriebenen Dichtung in einer Deponie 22. Wie in Abb. 9 gezeigt kann die Dichtung für den Bereich der Oberflächendichtung 19, der Basisdichtung 20 und/oder als Ersatz für eine sogenannte geologische Barriere 21 unterhalb der Basisdichtung 20 eingesetzt werden. Diese Maßnahmen können hierbei einzeln oder in Kombination angewandt werden.

Abb. 10 zeigt die Anwendung der Dichtung bei sogenannten Schlitzwanddichtungen. Hierbei wird in das bestehende Erdreich 23 eine sogenannte Schlitzwand 24 abgeteuft. In diese Schlitzwand 24, die vorteilhafterweise aus tixotrophen Flüssigkeiten besteht, wird nachträglich die Kachelflächendichtung 2 eingelassen, die zu diesem Zweck vorteilhafterweise in Folien oder Vliese bzw. Geotextilien 15 eingebettet oder auf diesen befestigt ist. Hierdurch verbinden sich in besonders vorteilhafter Weise die Dauerhaftigkeit der Dichtungsmedien mit der erhöhten Dichtwirkung.

Im Sinne der Dauerhaftigkeit können Kacheln oder trog- bzw. schalenförmige Gebilde von ihrer Materialbeschaffenheit auch aus langlebigen Metallen, Glas, Keramik oder ähnlich haltbaren oder inerten Materialien bestehen. In Fällen zeitlich begrenzter Ansprüche können die Kacheln oder trog- bzw. schalenförmigen Gebilde jedoch auch aus Kunststoffen, Kunststoffgemischen, Gummi, Beton, Betonkunststoffgemischen und ähnlichem bestehen.

Die Form der Kacheln oder trog- bzw. schalenförmigen Gebilde wird grundsätzlich auf den Einsatzzweck abgestimmt. Grundsätzlich können vom Grundriß her gesehen quadratische, beliebig rechteckige, kantige, dreieckförmige, fünfeckförmige, sechseckförmige und weitere mehreckförmige Elemente aufeinander abgestimmt und einander ergänzend eingesetzt werden.

Eine Sonderform der Anwendung in diesem Sinn ist die Verbindung spundwandartiger Formen für Dichtungsvorhaben gemäß Abb. 10. Sofern die spundwandähnlichen Einzelelemente sich ineinander verzahnen, kann hierbei konstruktiv weitgehend auf die Verwendung von Geotextilien oder Folien verzichtet werden.

Durch die Erfindung wird eine Vorrichtung zur Abdichtung von Flächen oder der Basis und Oberfläche von Deponien, Halden und Haufwerken gegenüber Sickerwasser und Niederschlägen in Verbindung mit der Möglichkeit zur Steuerung des flächigen Gasaustritts geschaffen. Durch die Erfindung können die eingangs beschriebenen Probleme und Nachteile gelöst oder minimiert werden. Durch die Erfindung kann die Aufgabe gelöst werden, die eingangs angegebenen Nachteile zu beheben, d.h. insgesamt funktionsfähiger, dauerhafter und wirtschaftlicher zum einen die Aufgaben zur Verhinderung des Eindringens von Niederschlagswasser sowie zur großflächigen Methanoxidation zu erfüllen und zum anderen Sickerwasseraustritte in den Untergrund zu vermeiden. Insbesondere kann der Bedarf an hochwertig dichtem Ton und Tongemischen vermieden oder minimiert sowie die Dauerhaftigkeit der verwendeten Dichtungskomponenten erhöht werden.

## Patentansprüche

1. Vorrichtung zur Abdichtung von Flächen, insbesondere von Deponien, Halden, Haufwerken oder dergleichen,
**gekennzeichnet durch**
eine mineralische Dichtungsschicht (1), die mit einer wasserdurchlässigen Schicht (2, 3; 2, 4; 10, 11, 3) versehen ist.

2. Vorrichtung nach Anspruch 1, **dadurch gekennzeichnet, daß** die wasserdurchlässige Schicht und die mineralische Dichtungsschicht einen vorgegebenen k_{F}-Wert erreichen.

3. Vorrichtung nach Anspruch 1 oder 2, **dadurch gekennzeichnet, daß** der k_{F}-Wert höchstens 10⁻⁹ m/sec. beträgt.

4. Vorrichtung nach einem der vorhergehenden Ansprüche, **dadurch gekennzeichnet, daß** der k_{F}-Wert höchstens 10⁻¹⁰ m/sec. beträgt.

5. Vorrichtung nach einem der vorhergehenden Ansprüche, **dadurch gekennzeichnet, daß** die wasserdurchlässige Schicht (2, 3; 2, 4; 10, 11, 3) wasserundurchlässige Dichtungselemente (2; 10) umfaßt.

6. Vorrichtung nach einem der vorhergehenden Ansprüche, **dadurch gekennzeichnet, daß** die wasserdurchlässige Schicht wasserdurchlässige Dichtungselemente umfaßt.

7. Vorrichtung nach einem der vorhergehenden Ansprüche, **dadurch gekennzeichnet, daß** zwischen den Dichtungselementen (2; 10) Fugen (3) und/oder Lücken (4) vorgesehen sind.

8. Vorrichtung nach Anspruch 7, **dadurch gekennzeichnet, daß** die Fugen und/oder Lücken derart bemessen sind, daß die wasserdurchlässige Schicht und die mineralische Dichtungsschicht einen vorgegebenen k_{F}-Wert erreichen.

9. Vorrichtung nach einem der vorhergehenden Ansprüche, **dadurch gekennzeichnet, daß** die Dichtungselemente als Kacheln (2), insbesondere gebrannte Kacheln, ausgebildet sind.

10. Vorrichtung nach einem der vorhergehenden Ansprüche, **dadurch gekennzeichnet, daß** die Dichtungselemente als trog- oder schalenförmige Gebilde (10) ausgestaltet sind.

11. Vorrichtung nach einem der vorhergehenden Ansprüche, **dadurch gekennzeichnet, daß** nur Teile der mineralischen Dichtungsschicht mit Dichtungselementen (2; 10) versehen sind.

12. Vorrichtung nach einem der vorhergehenden Ansprüche, **dadurch gekennzeichnet, daß** die Dichtungselemente (2; 10) an, insbesondere auf, der mineralischen Dichtungsschicht (1; 14) liegen.

13. Vorrichtung nach einem der vorhergehenden Ansprüche, **dadurch gekennzeichnet, daß** die Dichtungselemente (2; 10) in der mineralischen Dichtungsschicht (1; 14) liegen.

14. Vorrichtung nach einem der vorhergehenden Ansprüche, **dadurch gekennzeichnet, daß** die Dichtungselemente (2; 10) mehrlagig übereinander angeordnet sind.

15. Vorrichtung nach einem der vorhergehenden Ansprüche, **dadurch gekennzeichnet, daß** die Dichtungselemente (2; 10) mit anderen Dichtungselementen kombiniert werden.

16. Vorrichtung nach einem der vorhergehenden Ansprüche, **dadurch gekennzeichnet, daß** auf die mineralische Dichtungsschicht (1; 14) eine Dichtungsbahn (12), vorzugsweise aus Kunststoff, aufgelegt wird.

17. Vorrichtung nach einem der vorhergehenden Ansprüche, **dadurch gekennzeichnet, daß** die Dichtungselemente (2; 10) auf Netzen, Vliesen oder dergleichen haftend angebracht oder mit Haftelementen verbunden sind.

18. Vorrichtung nach einem der vorhergehenden Ansprüche, **dadurch gekennzeichnet, daß** die Dichtungselemente (2; 10) in eine Matte (14), vorzugsweise eine Bentonitmatte, eingebettet sind.

19. Vorrichtung nach Anspruch 18, **dadurch gekennzeichnet, daß** die Matte (14) durch Vliese oder Folien oder dergleichen umschlossen ist.

20. Vorrichtung nach einem der vorhergehenden Ansprüche, **dadurch gekennzeichnet, daß** die Dichtungselemente perforiert oder mit Aussparungen (17) versehen sind.

21. Vorrichtung nach einem der vorhergehenden Ansprüche, **dadurch gekennzeichnet, daß** die trog- oder schalenförmigen Gebilde (10) mit grobporigen, feuchtigkeitsspeichernden oder stützenden Elementen (16) ausgestaltet sind oder daß die trog- oder schalenförmigen Gebilde (10) aus grobporigen, feuchtigkeitsspeichernden oder stützenden Elementen bestehen.

22. Vorrichtung nach einem der vorhergehenden Ansprüche, **dadurch gekennzeichnet, daß** die Dichtungselemente (2; 10) Aussparungen (17) zur Aufnahme von Fugenmaterialien (18) aufweisen.

23. Vorrichtung nach einem der vorhergehenden Ansprüche, **dadurch gekennzeichnet, daß** die Dichtungselemente (2; 10) überlappend oder verzahnend ausgebildet sind, wobei die Dichtungselemente insbesondere mit Nuten, Stegen, Noppen, Löchern, Wölbungen, Aufkantungen oder dergleichen versehen sind.

24. Vorrichtung nach einem der vorhergehenden Ansprüche, **dadurch gekennzeichnet, daß** die wasserdurchlässige Schicht eine wasserundurchlässige Folie umfaßt, die gezielt durchlöchert ist.

25. Deponie, Halde, Haufwerk oder dergleichen,
**gekennzeichnet durch**
eine Vorrichtung nach einem der Ansprüche 1 bis 24.

26. Deponie, Halde, Haufwerk oder dergleichen nach Anspruch 25, **dadurch gekennzeichnet, daß** die Oberflächendichtung und/oder die Basisdichtung und/oder eine Dichtung unterhalb der Basisdichtung eine Vorrichtung nach einem der Ansprüche 1 bis 24 umfaßt.

27. Schlitzwand, **gekennzeichnet durch** eine Vorrichtung nach einem der Ansprüche 1 bis 24.
